# EUROPEAN PATENT SPECIFICATION

(11) **EP 2 728 224 B1**
(45) Date of publication and mention of the grant of the patent: **14.02.2018**
(21) Application number: 12190669.7
(22) Date of filing: 30.10.2012
(51) Int. Cl.: F16H 59/04, F16H 59/10, F16H 61/24, F16H 59/02

(54) **Shifter assembly having pivoting twin plungers**
Schaltanordnung mit drehbaren Zwillingskolben
Ensemble compensateur à pistons jumelés pivotant

(43) Date of publication of application: 07.05.2014
(73) Proprietor: Kongsberg Automotive AB, 565 28 Mullsjoe (SE)
(72) Inventor: Kvarnström, Anders, 554 47 Jönköping (SE)
(74) Representative: Uexküll & Stolberg

(56) References cited:
- EP-A1- 0 075 693
- EP-A1- 1 736 846
- EP-A1- 1 752 688
- EP-A2- 0 978 669
- WO-A1-99/32316
- JP-A- S6 091 047

## Description

### BACKGROUND OF THE INVENTION

### 1. Field of Invention

The present invention relates to a shifter assembly for a transmission of a vehicle according to the preamble of claim 1.

### 2. Description of Related Art

There is a desire within the industries utilizing shifter assemblies communicating with a transmission by electronic signals to reduce the number of components and size of the shifter assembly. Many techniques have been used to translate the physical movement of the shifter assemblies into electronic signals communicated to the transmission. One solution in the industry is disclosed in U.S. Patent No. 4,519,266 (the '266 patent). Specifically, the '266 patent discloses a shift assembly including a housing and a plurality of magnetic sensors fixed to the housing. The shift assembly further includes a first arm defining a first axis and having a plurality of magnets. The shift assembly additionally includes a second arm defining a second axis and having a plurality of magnets. The shift assembly also includes a gear shift lever fixed to the first arm and extending out of the housing. As the gear shift lever pivots about the first axis, the first arm rotates about the first axis. The plurality of the magnets on the first arm rotate relative to the at least one of the plurality of sensors disposed in the housing to indicate physical movement of the gear shift lever. As gear shift lever pivots about the second axis, the second arm moves about the second axis. The plurality of the magnets on the second arm rotate relative to the at least one of the plurality of sensors disposed in the housing to indicate physical movement of the gear shift lever.

EP 1 736 846 A1 discloses a shifter assembly comprising the features of the preamble of claim 1. To generate latching forces in the predetermined select positions of the shift actuator a magnet is fixed in the housing and is arranged such that it acts on an element susceptible to magnetic interaction with the magnet such that a desired magnetic force on the selection arm is generated when the selection arm reaches a predetermined select position. However, such permanent magnets or elector-magnets and elements to be attracted by the magnets are rather space consuming. In addition, the magnetic fields can in principle cause interferences that lead to a malfunction of the gear receiver which in turn can result in erroneous determinations of the select position of the shift actuator.

It is an object of the present invention to provide a shifter assembly of the type as defined_in the preamble of claim 1 which allows for generation of a desired latching force in the predetermined select positions of the shift actuator while at the same time allows for a save determination of the select position of the shift actuator.

This object is achieved by a shifter assembly comprising the features of claim 1. Preferred embodiments of the invention are set out in claims 2 to 7.

### SUMMARY OF THE INVENTION AND ADVANTAGES

The features of the preamble of claim 1 provide for a shifter assembly for selecting one of a plurality of gears of a transmission of a vehicle. The shifter assembly comprises a housing and a gear receiver fixed relative to the housing. The shifter assembly further comprises a selection receiver fixed relative to the housing and spaced from the gear receiver. The shifter assembly also comprises a shift actuator pivotally mounted to the housing with the shift actuator having a gear arm defining a first axis and a selection arm defining a second axis spaced from the first axis with the gear arm being fixed relative to the selection arm. The shifter assembly comprises a shift lever fixed to the shift actuator and movable in a first direction for rotating the shift actuator about the second axis for selecting one of the plurality of gears and movable in a second direction for rotating the shift actuator about the first axis. The shifter assembly further comprises a gear emitter coupled to the gear arm for movement with the gear arm with the gear emitter transmitting a signal to the gear receiver as the shift actuator rotates about the second axis to select between a plurality of gears. The shifter assembly also comprises a selection emitter coupled to the selection arm for movement with the selection arm with the selection emitter transmitting a signal to the selection receiver as the shift actuator rotates about the first axis.

According to the present invention a detent structure is fixed relative to said housing. Thus, the detent structure is also fixed with respect to the housing as is the gear receiver so that there can be no offset or shift occurring over time between the position dependent detent force and the position determination of the shift actuator at the predetermined select positions. The detent structure defines a plurality of detents, wherein the selection arm is moveable between said of the plurality of detents for moving said selection emitter relative to said selection receiver.

### BRIEF DESCRIPTION OF THE DRAWINGS

Other advantages of the present disclosure will be readily appreciated, as the same becomes better understood by reference to the following detailed description when considered in connection with the accompanying drawings.
Figure 1 is a perspective view of a shifter assembly.
Figure 2 is a perspective view of the shifter assembly with a housing in phantom and a handle removed.
Figure 3 is a perspective view of the shifter assembly with the housing and the handle removed, more specifically showing a shift actuator with a selection arm in a automatic selection position and a gear arm in an intermediate position
Figure 4 is a cross-sectional plan view of the shift assembly without the handle.
Figure 5 is a fragmented perspective view of a selection emitter and the selection arm with the selection emitter shown in phantom.
Figure 6 is a perspective view of the shift actuator.
Figure 7 is a fragmented cross-sectional perspective view of a pivot interface.
Figure 8 is a perspective view of a pivot bracket.
Figure 9 is a fragmented cross-sectional perspective view of the pivot bracket and the shift actuator.
Figure 10 is a perspective view of a groove structure and a limiting structure.
Figure 11 is a front view of the groove structure and the limiting structure.
Figure 12 is a cross-sectional side view of the groove structure and the limiting structure.
Figure 13 is a perspective view of a detent structure and an anti-rotation structure.
Figure 14 is a front view of the detent structure and the anti-rotation structure.
Figure 15 is a cross-sectional side view of the detent structure and the anti-rotation structure.
Figure 16 is a plan view of a shift pattern.
Figure 17 is a perspective view of the shifter assembly with the housing and the handle removed, more specifically showing the shift actuator with the mode arm in a manual mode position and the gear arm in an intermediate position.
Figure 18 is a fragmented perspective view of the anti-rotation structure.
Figure 19 is a perspective view of the shifter assembly with the housing and the handle removed, more specifically showing the shift actuator with the mode arm in an automatic mode position and the gear arm in an ++ (R) position.
Figure 20 is a perspective view of the shifter assembly with the housing and the handle removed, more specifically showing the shift actuator with the mode arm in an automatic mode position and the gear arm in an + (N,R) position.
Figure 21 is a perspective view of the shifter assembly with the housing and the handle removed, more specifically showing the shift actuator with the mode arm in an automatic mode position and the gear arm in an - (N,D) position.
Figure 22 is a perspective view of the shifter assembly with the housing and the handle removed, more specifically showing the shift actuator with the mode arm in an automatic mode position and the gear arm in an -- (D) position.
Figure 23 is a fragmented perspective view of a limiting structure, more specifically showing the shift actuator with the gear arm aligned with an aperture.
Figure 24 is a fragmented perspective view of the limiting structure, more specifically showing the shift actuator with the gear arm aligned to abut the limiting structure.
Figure 25 is a perspective view of a lock in an unlocked position.
Figure 26 is a perspective view of the lock in a locked position.

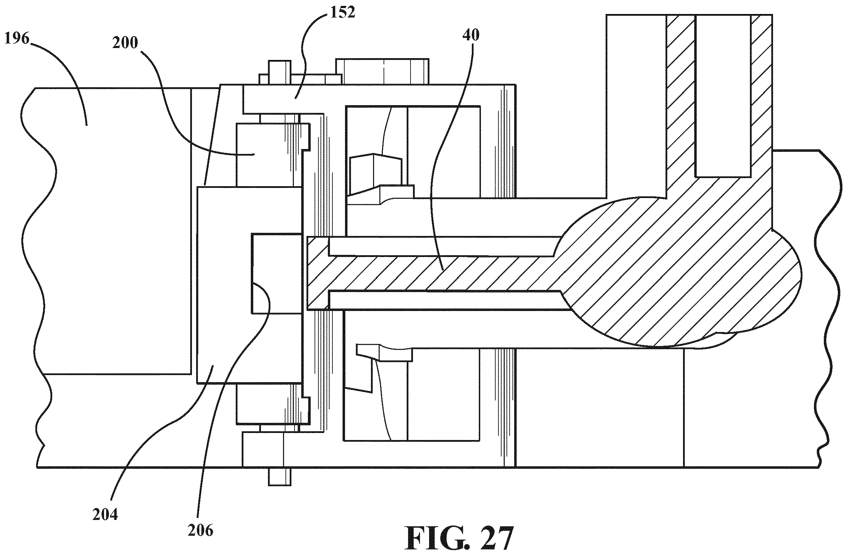

Figure 27 is a fragmented partially cross-sectional perspective view of the lock and the shift actuator.

### DETAILED DESCRIPTION OF THE INVENTION

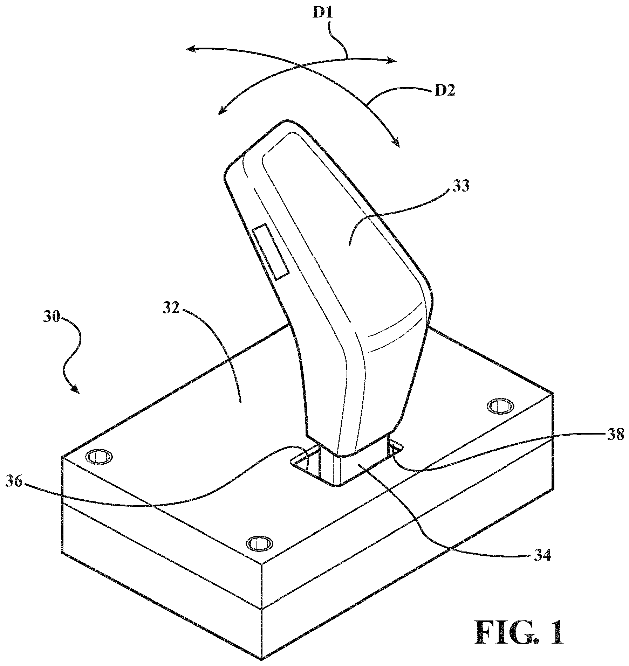

Referring to the Figures wherein like numerals indicate like or corresponding parts throughout the several views, a shifter assembly 30 is provided and is electronically connected to a transmission (not shown) for selecting one of a plurality of gears of the transmission of a vehicle as generally shown in Figure 1. The shifter assembly 30 includes a housing 32 and a shift lever 34. The shifter assembly 30 further includes a handle 33 mounted to the shift lever 34 by any suitable manner. The housing 32 defines a working chamber 36 and a hole 38 with the hole 38 extending through the housing 32 and into the working chamber 36. The shift lever 34 extends through the hole 38 and into the working chamber 36 of the housing 32. It is to be appreciated that the shifter assembly 30 may alternatively be mechanically connected to the transmission. It is to be further appreciated the shifter assembly 30 may be used in any suitable type of transmission, such as, but not limited to a manual transmission or an automatic transmission.

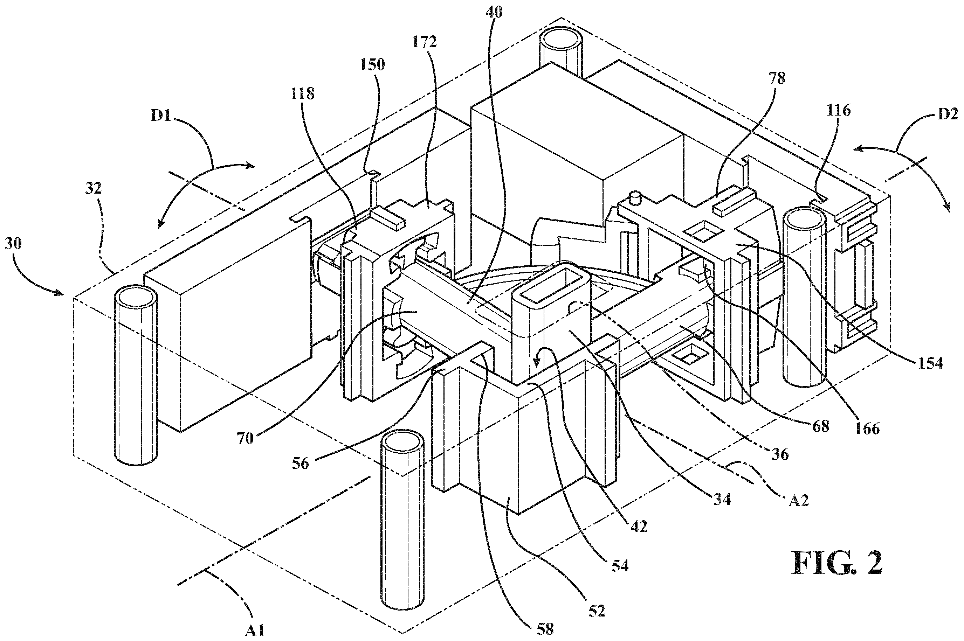

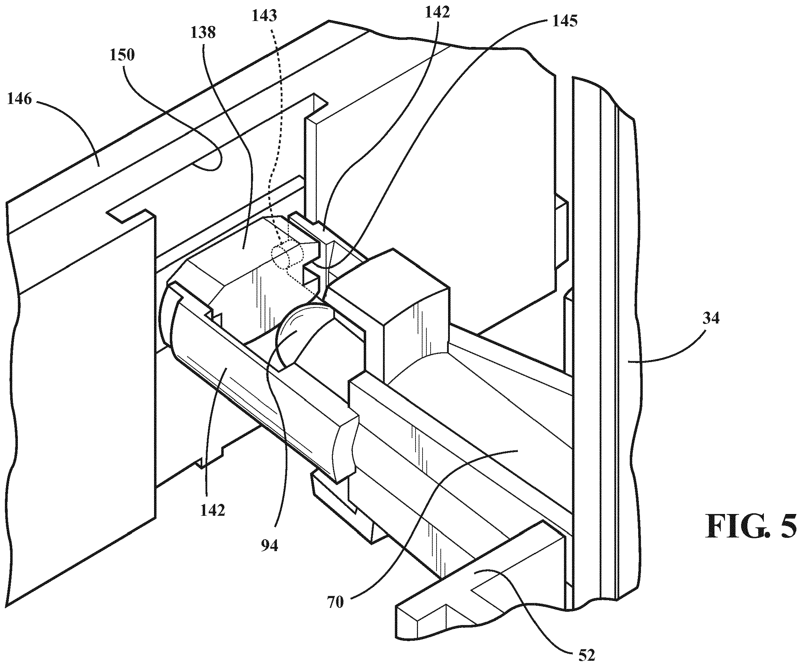

As best shown in Figures 2-3, the shifter assembly 30 includes a shift actuator 40 movably disposed in the working chamber 36 of the housing 32. The shift lever 34 is fixed to the shift actuator and extends from the working chamber 36 through the hole 38. The shift actuator 40 defines a cavity 44 as shown in Figures 5-6. The cavity 44 has a substantially conical configuration.

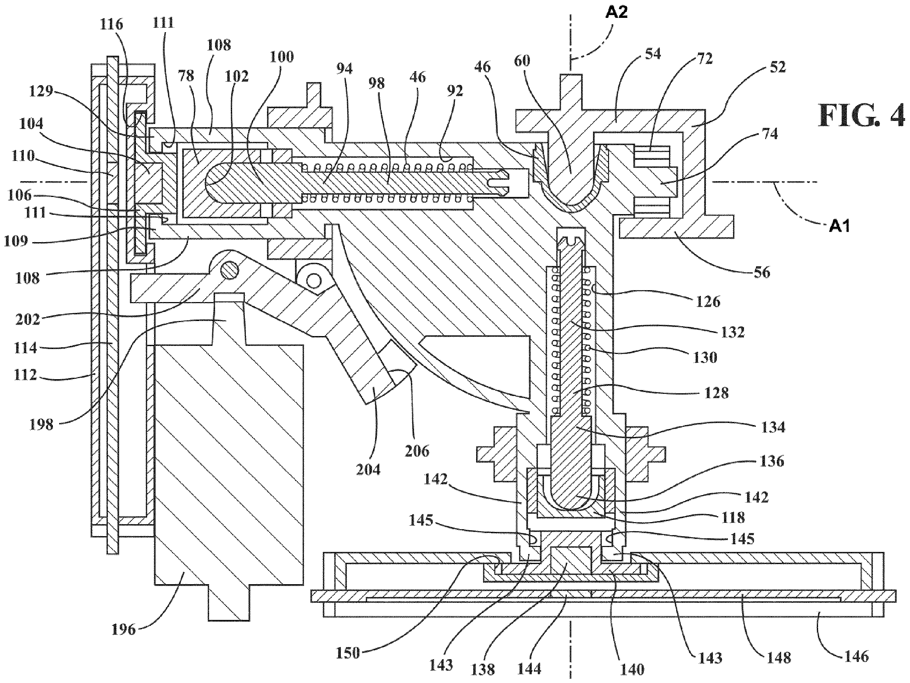

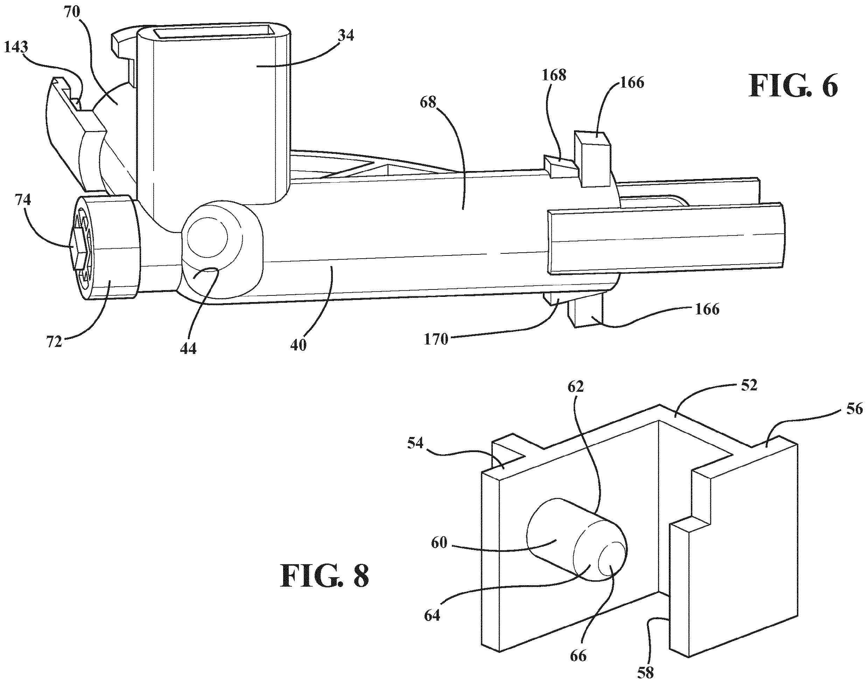

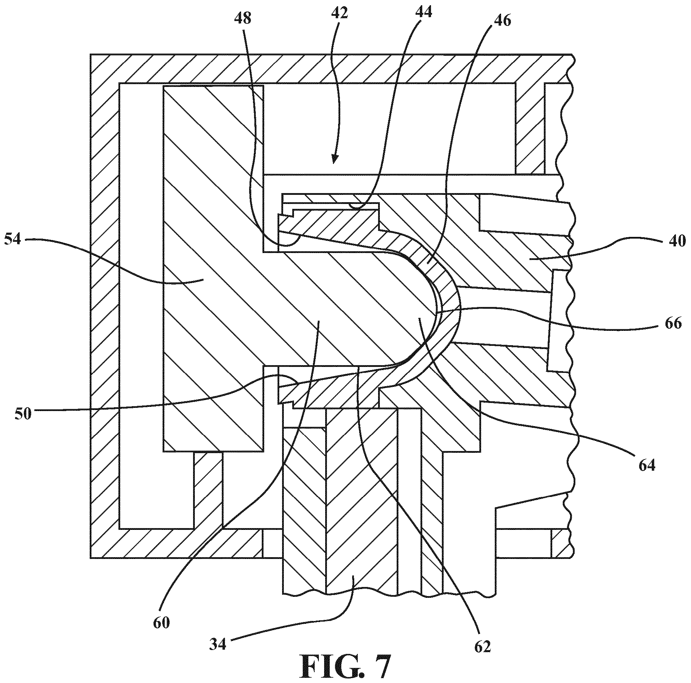

Referring to Figures 4-7, the shifter assembly 30 includes a pivot interface 42 partially defined by the shift actuator 40. More specifically, the pivot interface 42 is disposed in the working chamber 36 of the housing 32. Turning to Figure 6, the pivot interface 42 has an insert 46 disposed in the cavity 44 of the shift actuator 40. More specifically, the insert 46 has a mating configuration with the cavity 44 and is fixed to the shift actuator 42. The insert 46 is comprised of any suitable low friction material, such as, but not limited to polyoxymethylene (POM) or similar thermoplastics. The insert 46 has an insert surface 48 defining an insert cavity 50 with a substantially conical configuration. It is to be appreciated that the cavity 44 and the insert cavity 50 may have any suitable configuration.

The pivot interface 42 is further partially defined by a pivot bracket 52. The pivot bracket 52 is fixed to the housing 32 relative to the shift actuator 40 and disposed in the working chamber 36. The pivot bracket 52 has a substantially U-shaped configuration. Moreover, the pivot bracket has a first flange 54 and a second flange 56 substantially parallel to each other.

The pivot bracket 52 further has a bushing surface 58 disposed on the second flange 56. More specifically, the bushing surface 58 and the first flange 54 face each other. The pivot bracket 52 further has a protrusion 60 extending from the first flange 54. More specifically, the protrusion 60 extends transverse the bushing surface 58. The protrusion 60 has a protrusion surface 62 with a substantially cylindrical configuration. The protrusion 60 further has a protrusion end 64 with a substantially hemispherical configuration. The protrusion end 64 has an end surface 66. However, it is to be appreciated that the protrusion 60 and the protrusion end 64 may have any suitable configuration.

The protrusion 60 of the pivot bracket 52 is rotatably coupled to the cavity 44 of the shift actuator 40. More specifically, the protrusion 60 is disposed in the cavity 44. The protrusion surface 62 and the end surface 66 of the protrusion 60 abut the cavity surface of the shift actuator 40.

As best shown in Figure 6, the protrusion 60 of the pivot bracket 52 directly engages the insert 46 during movement of the shift actuator 40. More specifically, the protrusion 60 is disposed in the insert cavity 50. The protrusion surface 62 and the end surface 66 of the protrusion 60 abut the insert surface 48 of the insert 46.

Turning back to Figures 2-4, the shift actuator 40 has a gear arm 68 defining a first axis A1. More specifically, the first axis A1 is defined along the gear arm 68. Referring specially to Figure 4, the first axis A1 is transverse to the protrusion 60 of the pivot bracket 52. The shift actuator 40 has a selection arm 70 defining a second axis A2 spaced from the first axis A1. More specifically, the second axis A2 is disposed longitudinally along the selection arm 70. Referring specifically to Figure 4, the second axis A2 is aligned with the protrusion 60 of the pivot bracket 52.

As shown, the shift actuator 40 is a unitary part comprising the gear arm 68 and the selection arm 70. The selection arm 70 is pivotable about the first axis A1 as the gear arm 68 rotates about the first axis A1 and the gear arm 68 is pivotable about the second axis A2 as the selection arm 70 rotates about the second axis A2. However, it is to be appreciated that the shift actuator 40 could be comprised of any suitable number of parts.

The gear arm 68 is fixed relative to the selection arm 70. More specifically the gear arm 68 and the selection arm 70 extend perpendicular to each other toward distal ends. The shift lever 34 is fixed to the shift actuator 40 and extends away from the shift actuator 40 perpendicular to both the first axis A1 and the second axis A2. However, it is to be appreciated that the first axis A1 and the second axis can be any suitable configuration.

In the embodiment shown, the first axis A1 and the second axis A2 are coplanar and intersect each other at the pivot interface 42. In a more specific embodiment, the first axis A1 is perpendicular to the second axis A2. Moreover, the gear arm 68 and the selection arm 70 are co-planer and intersect each other at the pivot interface 42.

The first axis A1 and the second axis A2 are transverse and intersect each other at the pivot interface 42. More specifically the gear arm 68 and the selection arm 70 extend transverse to each other toward distal ends. It is to be appreciated that the first axis A1 and the second axis A2 are skew and cross each other at the pivot interface 42. More specifically, in another alternative embodiment (not shown), the first axis A1 is non-coplanar and spaced from the second axis A2. Moreover, the gear arm 68 and the selection arm 70 are non-coplaner.

The shift lever 34 is fixed to the shift actuator 40 and extends away from the shift actuator 40 transversely to the first axis A1 of the gear arm 68 and the second axis A2 of the selection arm 70. More specifically, the shift lever 34 is perpendicular to the first axis A1 and the second axis A2. Moreover, the shift lever 34 extends away from the shift actuator 40 at the pivot interface 42.

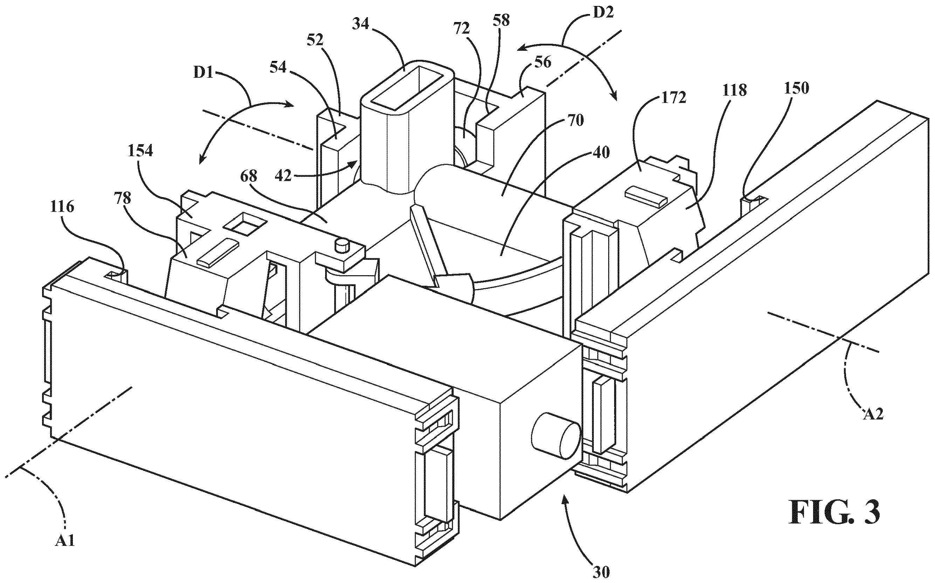

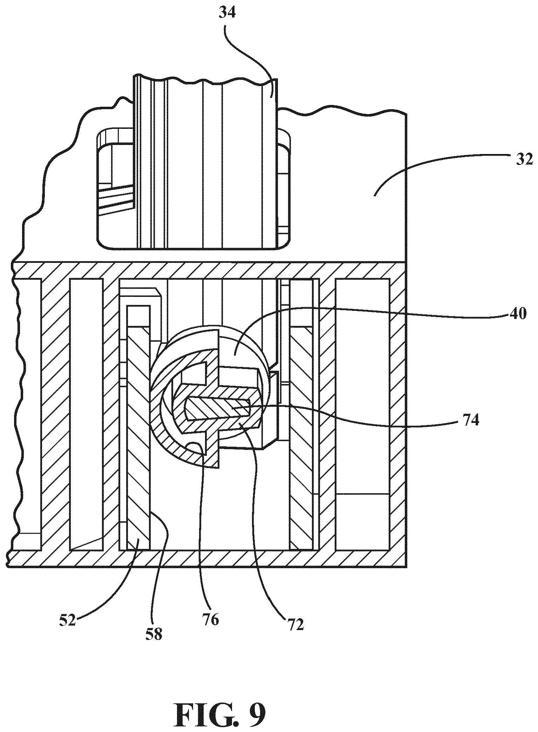

As best shown in Figures 3-5 and 8, the shift actuator 40 further has a rod 74 extending away from the pivot interface 42 along the first axis A1. The shift actuator 40 has a bushing 72 defining a rod aperture. The rod 74 of the shift actuator 40 is disposed in the rod aperture of the bushing 72. Referring specifically to Figure 9, the bushing 72 further defines a plurality of compression cavities 76 extending through the bushing 72.

The bushing 72 of the shift actuator 40 abuts the bushing surface 58 of the pivot bracket 52 as the shift actuator 40 is coupled to the pivot bracket 52. The plurality of compression cavities 76 within the bushing 72 are capable of deforming and compressing. Furthermore the bushing 72 retains the pivot bracket 52 in the shift actuator 40 at the pivot interface 42.

The bushing 72 retains the protrusion 60 in the insert cavity 50. The bushing 72 rotates on the bushing surface 58 as the shift actuator 40 rotates about the first axis A1. The bushing 72 rotates along the bushing surface 58 as the shift actuator 40 rotates about the second axis A2.

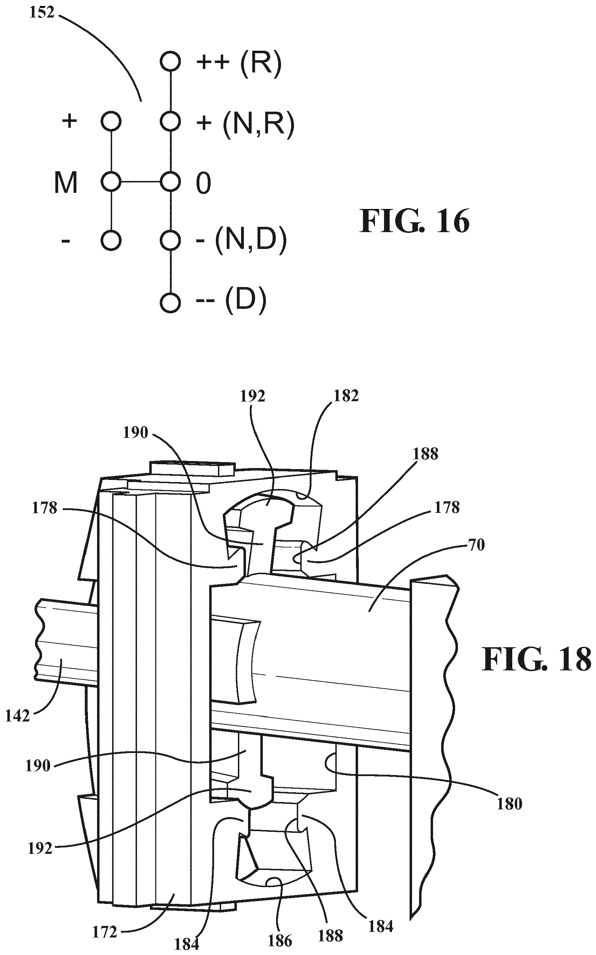

In the embodiment shown in the Figures and as shown in Figure 16, the shifter assembly 30 is linked to an automatic transmission with an H-Type shift pattern 152 with the shifter assembly 30 operating in an automatic mode or a manual mode. In this embodiment of the shifter assembly 30, the gear arm 68 selects a specific gear and the selection arm 70 selects between the automatic mode and the manual mode. In a non-illustrated embodiment, the shifter assembly 30 could be linked to a manual transmission with the gear arm 68 used to select a specific gear and the selection arm 70 used to select a specific gate of gears.

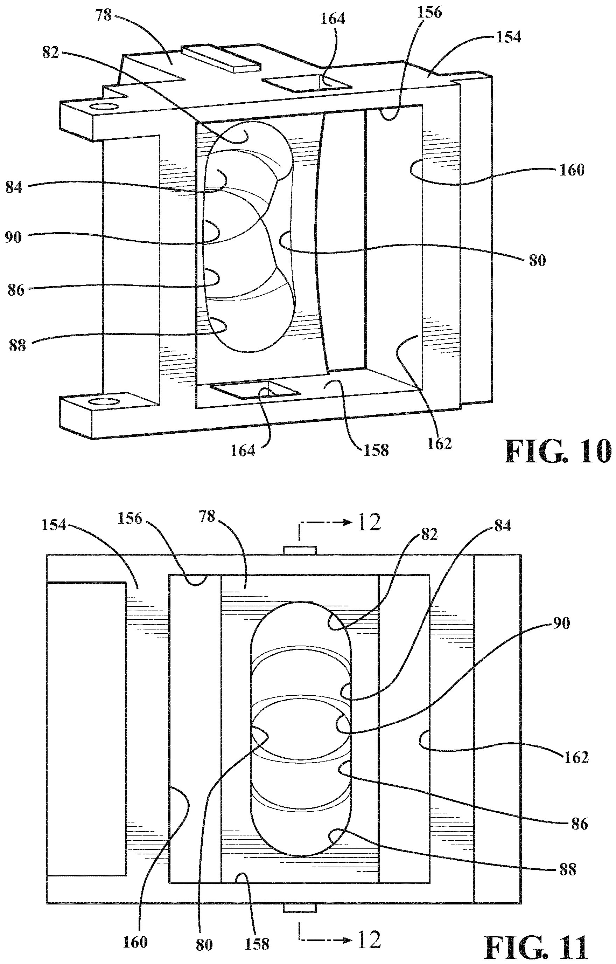

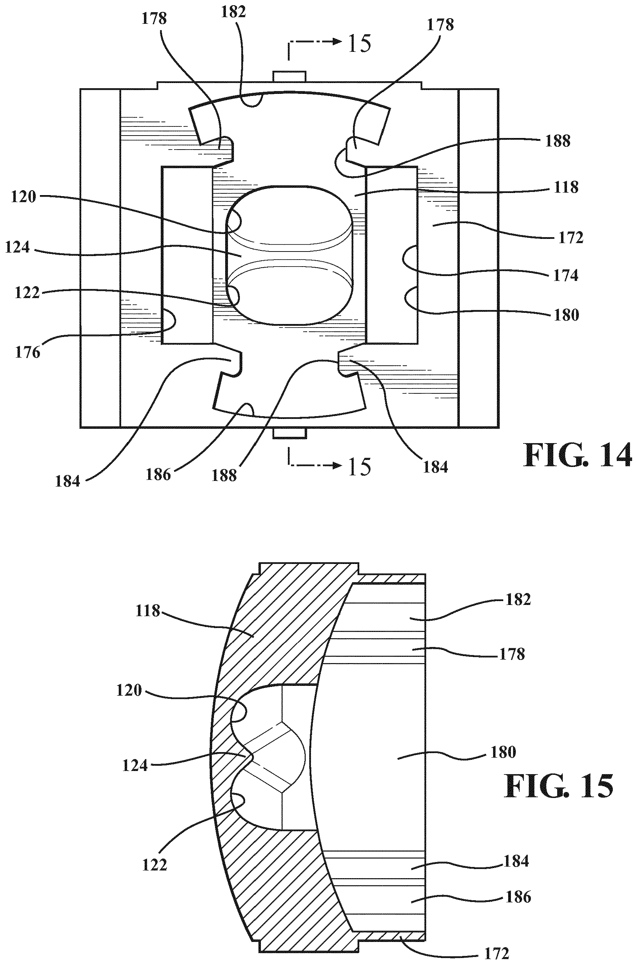

Turning to Figures 2-3, 9-11, and 15, the shifter assembly 30 includes a groove structure 78 fixed relative to the housing 32 and defining a groove 80. More specifically, the groove structure 78 is disposed in the working chamber 36 relative to the distal end of the gear arm 68. The groove structure 78 defines a groove 80 having a plurality of notches 82, 84, 86, 88 and an intermediate position between said plurality of notches 82. The groove structure 78 has a groove surface further defining a first notch 82 extending into the groove 80 for a ++ (R) position and a second notch 84 extending into the groove 80 for a + (N,R) position or + position adjacent to the first notch 82. The groove surface additionally defines a third notch 86 extending into the groove 80 for a - (N,D) position or - position and a fourth notch 88 extending into the groove 80 for a -(D) position adjacent to the third notch 86. The groove surface also defines an intermediate notch 90 extending into the groove 80 between the second notch 84 and the third notch 86 for a intermediate position.

As shown in Figure 4, the shift actuator 40 defines a plunger cavity. More specifically, the shift actuator 40 defines a gear plunger cavity 92 and a selection plunger cavity 126. The selection plunger cavity 126 is discussed in more detail later in the specification. The gear arm 68 defines the gear plunger cavity 92 extending along the first axis A1. More specifically, the gear plunger cavity 92 extends through the distal end of the gear arm 68. The gear arm 68 has a biasing member end and a plunger end relative to the gear plunger cavity 92.

The shift actuator 40 has a plunger. More specifically, the shift actuator 40 has a gear plunger 94 and a selection plunger 128. The selection plunger 128 is discussed in more detail later in the specification. The gear has a gear biasing member 96 with the gear plunger 94 and the gear biasing member 96 disposed in the gear plunger cavity 92. The gear plunger 94 has a rod portion 98 and a pin portion 100. The pin portion 100 and the rod portion 98 have a substantially cylindrical configuration with the rod portion 98 having a diameter smaller than a diameter of the pin portion 100. The pin portion 100 has a pin end 102 with a substantially hemispherical configuration. However, it is to be appreciated that the pin end 102 may have any suitable configuration.

The gear biasing member 96 is disposed around the rod portion 98 of the gear plunger 94. The gear biasing member 96 abuts the biasing member end of the gear plunger cavity 92 and the pin portion 100 of the gear plunger 94. The pin portion 100 is engaged in the intermediate notch 90 of the groove structure 78. The gear biasing member 96 biases the pin end 102 of the gear plunger 94 away from the gear arm 68 and into the groove 80 of the groove structure 78.

The shifter assembly 30 includes a gear emitter 104 coupled to the gear arm 68. More specifically, the gear emitter 104 is typically a magnet for emitting a magnetic field. Moreover, the gear arm 68 has a gear emitter structure 106 with the gear emitter 104 fixed to the gear emitter structure 106 for transmitting a signal. It should be appreciated that the gear emitter 104 can be any type of emitter suitable for transmitting a signal.

The gear arm 68 has a pair of arms 108 extending along the first axis A1. Each of the pair of arms 108 have a protuberance 109 extending toward the other of the pair of arms 108. The gear emitter 104 defines a pair of protuberance tracks 111. The gear emitter structure 106 is disposed between the pair of arms 108 such that the protuberances 109 of the pair of arms 108 align with and are disposed in the pair of protuberance tracks 111 of the gear emitter 104.

The groove structure 78 is disposed relative to the shift actuator 40 between the distal end of the gear arm 68 and the gear emitter structure 106. The groove structure 78 is further disposed between the pair of arms 108 of the gear arm 68.

The shifter assembly 30 includes a gear receiver 110 fixed relative to the housing 32. More specifically, the gear receiver 110 is typically a magnetic sensor for detecting changes in the magnetic field emitted by the gear emitter 104. The housing 32 has a gear circuit board structure 112 disposed in the working chamber 36 and fixed to the housing 32 relative to the gear arm 68 and the gear emitter 104. The gear circuit board structure 112 has a gear circuit board 114 with the gear receiver 110 mounted to the gear circuit board 114.

As best shown in Figures 2-3, the gear circuit board structure 112 defines a gear channel 116 relative to the gear receiver 110. The gear emitter structure 106 is movablydisposed in the gear channel 116. However, it is be appreciated that the gear receiver 110 can be any type of receiver suitable for receiving a signal from the gear emitter 104 and that the gear circuit board structure 112 may have any suitable number of gear receivers 114 for receiving the signal from the gear emitter 104.

The gear receiver 110 defines a fixed gear plane relative to the gear emitter 104. The gear emitter 104 is capable of moving parallel to the fixed gear plane and the gear arm 68 capable of pivoting relative to said gear emitter 104 during the movement of the gear arm 68, The gear emitter 104 can rotate about the protuberances 109 of the pair of arms 108 as the gear emitter 104 moves parallel to the fixed gear plane. The protuberances 109 of the pair of arms 108 can slide in the pair of protuberance tracks 111 of the gear emitter 104 as the gear emitter 104 moves parallel to the fixed gear plane. The gear emitter 104 and the gear receiver 110 are substantially equivalent to a selection emitter 138 and selection receiver 144 which are discussed below and shown further in Figure 5.

The gear receiver 110 is configured to receive the signal transmitted by the gear emitter 104. The gear receiver 110 detects the direction and the amount of movement of the shift actuator 40 by detecting the change of the signal of the gear emitter 104. The gear receiver 110 and gear circuit board 114 transmit the change of signal to the transmission for selecting between a plurality of gears.

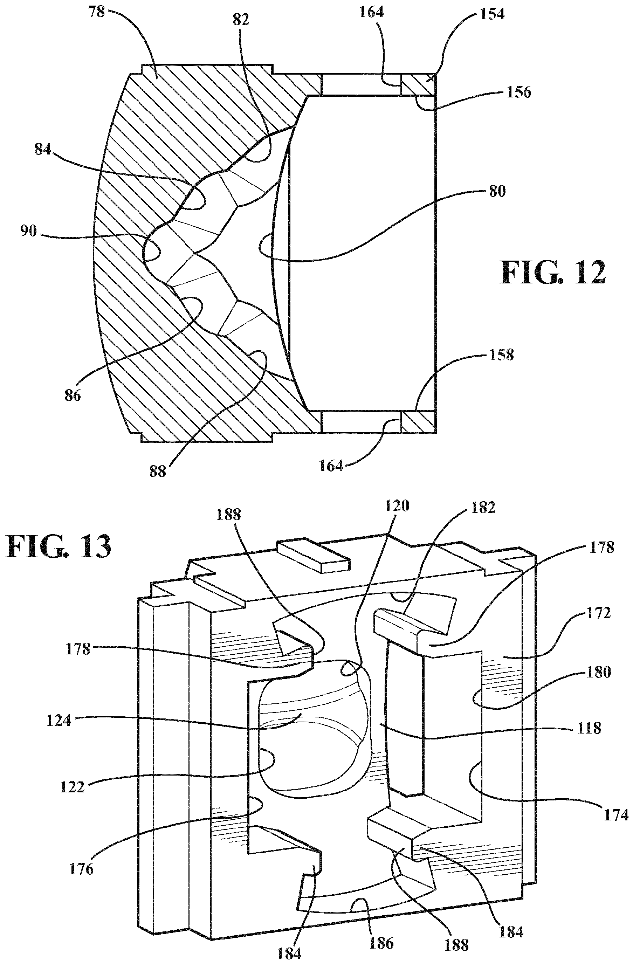

Turning to Figures 2-3 and 12-14, the shifter assembly 30 includes a detent structure 118 fixed to the housing 32 relative to the selection arm 70. More specifically, the detent structure 118 is disposed in the working chamber 36 relative to the distal end of the selection arm 70. The detent structure 118 has a detent surface defining a first detent 120 and a second detent 122. The detent surface further defines a ridge 124 between the first detent 120 and the second detent 122. The first detent 120 corresponds to the automatic transmission mode of the transmission and the second detent 122 corresponds to the manual transmission mode of the transmission.

As best shown Figure 4 and previously discussed, the shift actuator 40 defines the selection plunger cavity 126. More specifically, the selection arm 70 defines the selection plunger cavity 126 extending along the second axis A2. Moreover, the selection plunger cavity 126 extends through the distal end of the selection arm 70. The selection arm 70 has a biasing member end and a plunger end relative to the selection plunger cavity 126. The selection arm 70 has a spring end and a piston end 136 relative to the selection plunger cavity 126. The selection plunger cavity 126 extends through the piston end 136.

As previously discussed, the shift actuator 40 has a selection plunger. More specially, the selection arm 70 has a selection plunger 128 and a selection biasing member 130 disposed in the selection plunger cavity 126. The selection plunger 128 has a cylinder portion 132 and a piston portion 134. The piston portion 134 and the cylinder portion 132 are substantially cylindrical in configuration shape with the cylinder portion 132 smaller in width than the piston portion 134. The piston portion 134 has a piston end 136 with a substantially hemispherical configuration. However, it is to be appreciated that the piston end 136 may have any suitable configuration.

The selection biasing member 130 is disposed around the cylinder portion 132 of the selection plunger 128. The selection biasing member 130 abuts the spring end of the selection plunger cavity 126 and the piston portion 134 of the of the selection plunger 128. The piston portion 134 of the selection plunger 128 extends through the piston end 136 and is disposed in one of the first detent 120 and the second detent 122 of the detent structure 118. The selection biasing member 130 biases the piston end 136 of the selection plunger 128 away from the selection arm 70 and into one of the first and second detents 120, 122 of the detent structure 118.

As shown in Figures 4-5, the shifter assembly 30 includes a selection emitter 138 coupled to the selection arm 70. More specifically, the selection emitter 138 is typically a magnet for emitting a magnetic field. Moreover, the selection arm 70 has a selection emitter structure 140 with the selection emitter 138 fixed to the selection emitter structure 140 for transmitting a signal. It should be appreciated that the selection emitter 138 can be any type of emitter suitable for transmitting a signal.

The selection arm 70 has a pair of arms 142 extending along the second axis A2. Each of the pair of arms 142 have a protuberance 143 extending toward the other of the pair of arms 142. The selection emitter 138 defines a pair of protuberance tracks 145. The selection emitter structure 140 is disposed between the pair of arms 142 such that the protuberances 143 of the pair of arms 142 align with and are disposed in the pair of protuberance tracks 145 of the selection emitter 138.

The detent structure 118 is disposed relative shift actuator 40 between the distal end of the selection arm 70 and the selection emitter structure 140. The detent structure 118 is further disposed between the pair of arms 142 of the selection arm 70.

The shifter assembly 30 includes a selection receiver 144 fixed relative to the housing 32. More specifically, the selection receiver 144 is typically a magnetic sensor for detecting changes in the magnetic field emitted by the selection emitter 138. The shifter assembly 30 includes a selection circuit board structure 146 disposed in the working chamber 36 and fixed to the housing 32 relative to the selection arm 70 and the selection emitter 138. The selection circuit board structure 146 has a selection circuit board 148 with the selection receiver 144 mounted to the selection circuit board 148.

As best shown in Figures 2-3, the selection circuit board structure 146 defines a selection channel 150 relative to the selection receiver 144. The selection emitter structure 140 is movably disposed in the selection channel 150. However, it be appreciated that the selection receiver 144 can be any type of receiver suitable for receiving a signal from the selection emitter 138 and that the selection circuit board structure 146 may have any suitable number of selection receivers 148 for receiving the signal from the selection emitter 138.

The selection receiver 144 defines a fixed selection plane relative to the selection emitter 138. The selection emitter 138 is capable of moving parallel to the fixed selection plane and the selection arm 70 is capable of pivoting relative to said selection emitter 138 during the movement of the selection arm 70. The selection emitter 138 can rotate about the protuberances 143 of the pair of arms 142 as the selection emitter 138 moves parallel to the fixed selection plane. The protuberances 143 of the pair of arms 142 can slide in the pair of protuberance tracks 145 of the selection emitter 138 as the selection emitter 138 moves parallel to the fixed selection plane.

The selection receiver 144 is configured to receive the signal transmitted by the selection emitter 138. The selection receiver 144 detects the direction and the amount of movement of the shift actuator 40 by detecting the change of the signal of the selection emitter 138. The selection emitter 138 and the selection circuit board 148 transmit the change of signal to the transmission for selecting between the manual transmission mode and the automatic transmission mode.

The shifter assembly 30 includes a limiting structure 154 fixed the housing 32 relative to the gear arm 68. More specifically, the limiting structure 154 is fixed to the groove structure 78. The limiting structure 154 has a top surface 156 and a bottom surface 158. The limiting structure 154 further has a limiting surface 160 defining a limiting chamber 162 with the top surface 156 and the bottom surface 158.

The limiting structure 154 defines an aperture 164. More specifically, the aperture 164 is a pair of apertures 164 with one of the apertures 164 defined through the top surface 156 of the limiting chamber 162 and the other of the apertures 164 defined through the bottom surface 158 of the limiting chamber 162. The pair of apertures 164 extend through the limiting structure 154 into the limiting chamber 162.

As best shown in Figure 5, the gear arm 68 has a tab 166. More specifically, the gear arm 68 has a pair of tabs 166 with one of the tabs 166 extending towards the top surface 156 of the limiting structure 154 and the other of the tabs 166 extending towards the bottom surface 158 of the limiting structure 154. The gear arm 68 further has a first raised portion 168 adjacent to the one of the tabs 166 extending towards the top surface 156 and a second raised portion 170 relative to the other of the tabs 166 extending towards the bottom surface 158.

The other of the tabs 166 extending towards the bottom surface 158 abuts the bottom surface 158 of the limiting structure 154 when the gear arm 68 pivots about the second axis A2 and the selection arm 70 is disposed in the second detent 122 to select a (-) lower gear for the transmission. The gear plunger 94 moves along the groove 80 from the intermediate notch 90 to the third notch 86 in the groove structure 78. The abutment of the other of the tabs 166 extending towards the bottom surface 158 and the limiting structure 154 prevents the gear plunger 94 from moving along the groove 80 to the fourth notch 88.

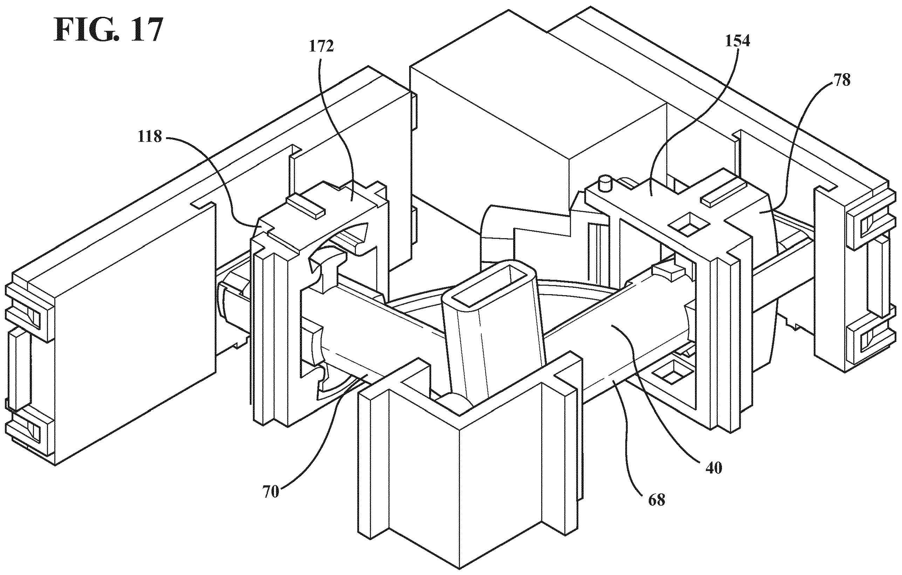

Turning to Figures 2-3, 12-14, and 17, the shifter assembly 30 includes an anti-rotation structure 172 fixed to the housing 32 relative to the selection arm 70. More specifically, the anti-rotation structure 172 is fixed to the detent structure 118. The anti-rotation structure 172 has an anti-rotation surface 174 defining a selection arm cavity 176.

The anti-rotation structure 172 has a first set of ribs 178 extending into the selection arm cavity 176 and dividing the selection arm cavity 176 into a middle chamber 180 and a first chamber 182. The anti-rotation structure 172 further has a second set of ribs 184 extending into the selection arm cavity 176 and further dividing the selection arm cavity 176 into a middle chamber 180 and a second chamber 186.

The anti-rotation structure 172 defines an orifice 188. More specifically, the orifice 188 is a pair of orifices 188 with the one of the orifices 188 defined between the first set of ribs 178 and the other of the orifices 188 defined between the second set of ribs 184.

The selection arm 70 has a finger 190. More specifically, the finger 190 is a pair of fingers 190 with the one of the fingers 190 extending from the selection arm 70 towards the first set of ribs 178 and the other of the fingers 190 extending from the selection arm 70 towards the second set of ribs 184. The pair of fingers 190 have a substantially T-shaped configuration. The pair of fingers 190 further have a head 192 with the head 192 being minimally smaller than the pair of orifices 188. The pair of fingers 190 are disposed in the selection arm cavity 176.

As best shown in Figures 4 and 24-25, the shifter assembly 30 has a lock actuator 194 disposed in the working chamber 36 and fixed to the housing 32 relative to the shift actuator 40. The lock 194 has a lock actuator 196 with an actuator rod 198. The lock 194 further has a lock bracket 200 with an actuator end 202 and a slot end 204. The lock bracket 200 defines a slot 206 in the slot end 204. However, it should be appreciated that the lock actuator 196 can be any a solenoid or any other type of actuator suitable for moving the lock bracket 200.

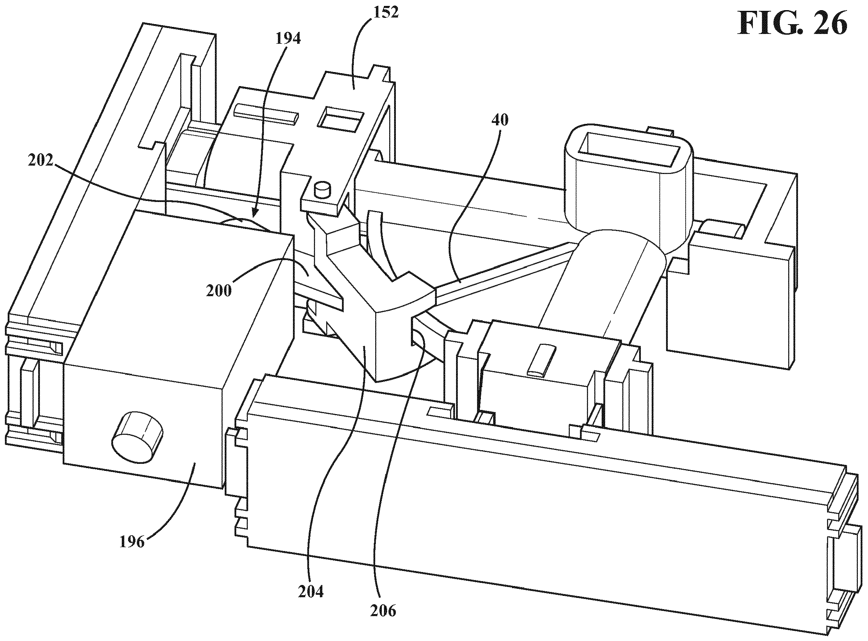

The lock bracket 200 is pivotally mounted to the limiting structure 154. The actuator rod 198 of the lock actuator 196 abuts the actuator end 202 of the lock bracket 200. Turning to Figure 26, the slot end 204 of the lock bracket 200 aligns with the shift actuator 40.

As best shown in Figure 1, the shift lever 34 has a first direction D1 of movement and a second direction D2 of movement about the two axes A1, A2 of the shift actuator 40. Turning to Figures 2-3, the first direction D1 of movement of the shift lever 34 rotates the shift actuator 40 about the second axis A2 of the selection arm 70 between the six transmission gear positions. The second direction D2 of movement of the shift lever 34 rotates the shift actuator 40 about the first axis A1 of the gear arm 68 between the two transmission modes. As the shift lever is moved in the second direction D2, the insert surface 48 of the insert 46 rotates around the end surface 66 of pivot bracket 52 as the shift actuator 40 rotates about the first axis A1. As the shift lever is moved in the first direction D1, the insert surface 48 of the insert 46 rotates around the protrusion surface 62 of pivot bracket 52 as the shift actuator 40 rotates about the second axis A2.

As best shown in Figure 2, the gear arm 68 is disposed in the limiting chamber 162 of the limiting structure 154. As the selection plunger 128 is disposed in the first detent 120, the shift actuator 40 is in an automatic transmission mode position. The pair of tabs 166 of the gear arm 68 align with the pair of apertures 164 of the limiting structure 154. The operator can move the gear arm from the intermediate notch 90 of the groove 80 to any one of the plurality of notches 82, 84, 86, 88 in the groove structure 78. The groove 80 is biased to return the gear plunger 94 to the intermediate notch 90 as the operator releases the shift lever 34.

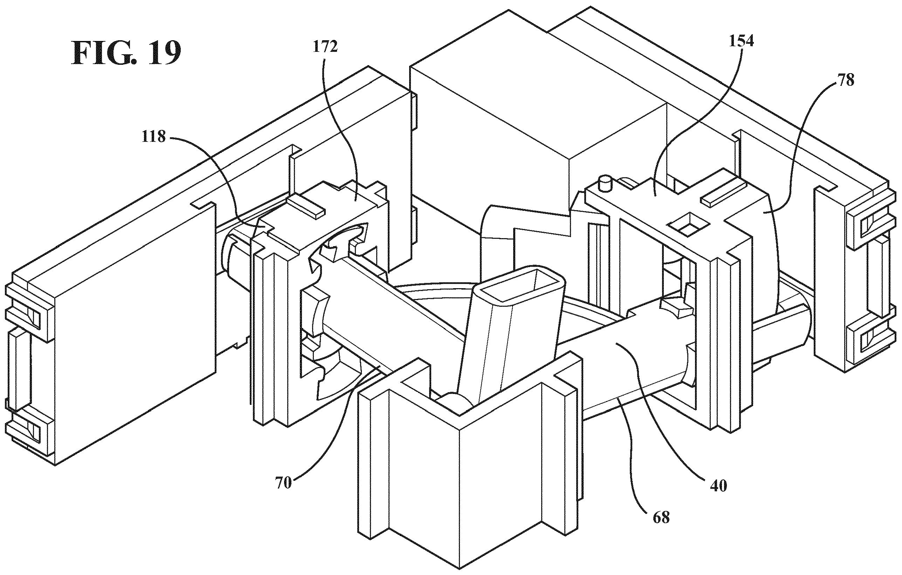

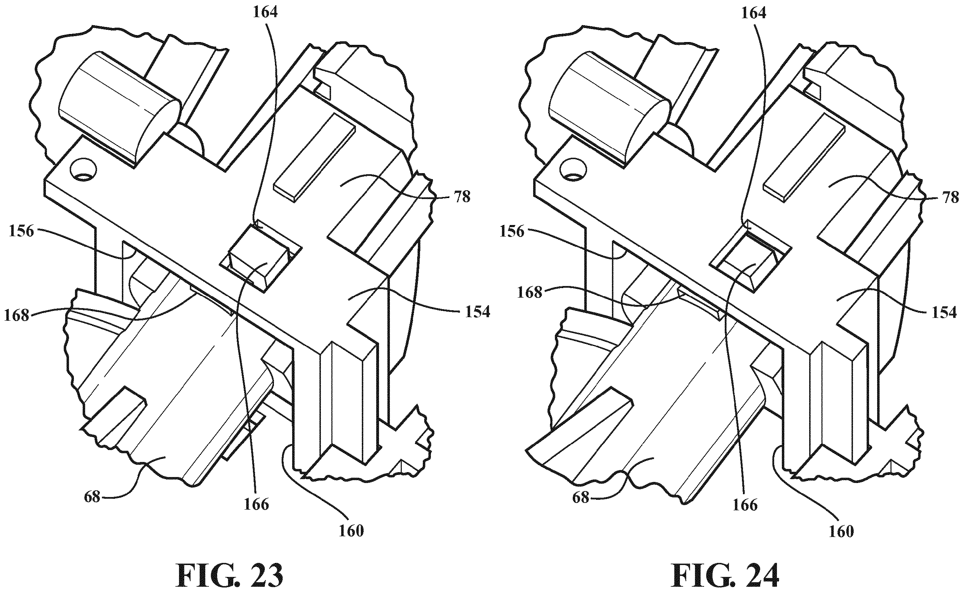

As best shown in Figure 19, in a first operative example, the shift actuator 40 is in the automatic transmission mode position with the selection plunger 128 disposed in the first detent 120 and the ++ (R) position with the gear plunger 94 moved to the first notch 82. More specifically, the shift lever 34 is moved in the first direction D1 and the gear plunger 94 is moved along the groove 80 from the intermediate notch 90 through the second notch 84 and is disposed in the first notch 82. Turning to Figure 23, the one of the tabs 166 extending towards the top surface 156 is disposed in one of the apertures 164 defined through the top surface 156 when the gear plunger 68 is moved to the first notch 82 to change the transmission to the ++ (R) position. The first raised portion 168 abuts the top surface 156 of the limiting structure 154.

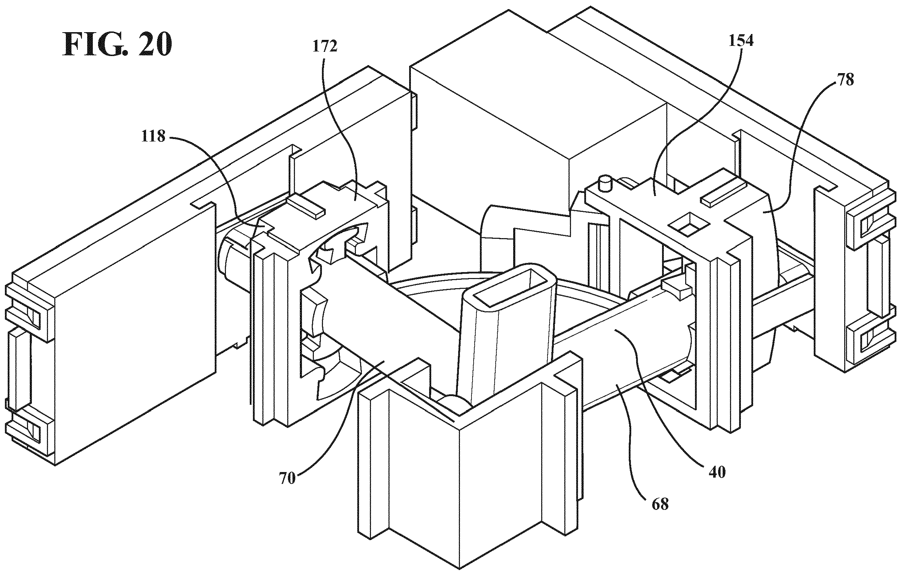

As best shown in Figure 20 in a second operative example, the shift actuator 40 is in the automatic transmission mode position with the selection plunger 128 disposed in the first detent 120 the + (N,R) position with the gear plunger 94 moved to the second notch 84. More specifically, the shift lever 34 is moved in the first direction D1 and the gear plunger 94 is moved along the groove 80 from the intermediate notch 90 and is disposed in the second notch 84.

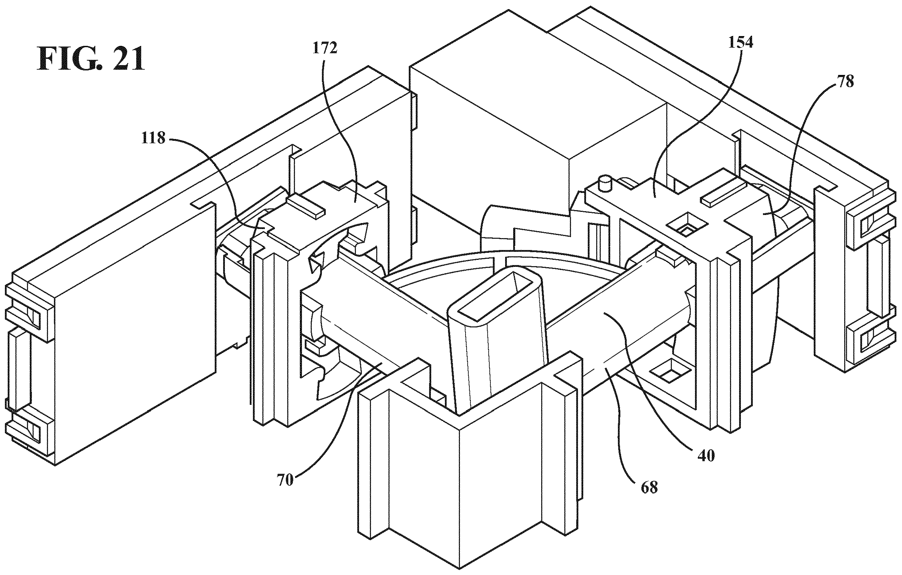

Turning to Figure 21 in a third operative example, the shift actuator 40 is in the automatic transmission position with the selection plunger 128 disposed in the first detent 120 and the - (N,D) position with the gear plunger 94 moved to the third notch 86. More specifically, the shift lever 34 is moved in the first direction D1 and the gear plunger 94 is moved along the groove 80 from the intermediate notch 90 and is disposed in the third notch 86.

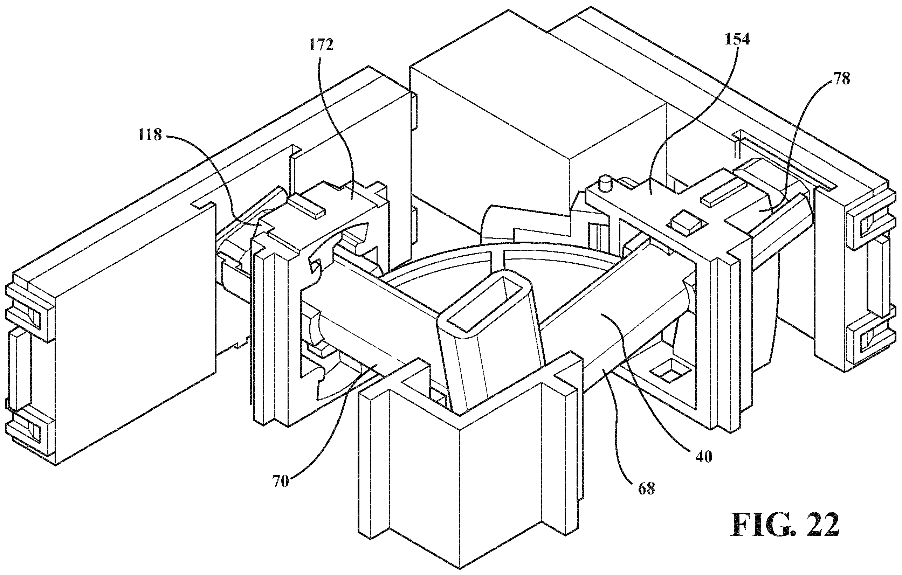

As best shown in Figure 22, in a fourth operative example, the shift actuator 40 is in the automatic transmission position with the selection plunger 128 moved to the first detent 120 and the -- (D) position with the gear plunger 94 disposed in the fourth notch 88. More specifically, the shift lever 34 is moved in the first direction D1 and the gear plunger 94 is moved along the groove 80 from the intermediate notch 90 through the third notch 86 and is disposed in the fourth notch 88. Turning to Figure 18, the other of the tabs 166 extending towards the bottom surface 158 is disposed in the other of the apertures 164 defined through the bottom surface 158 when the gear plunger 68 is moved to the intermediate notch 90 to the fourth notch 88 to change the transmission to the -- (D) position. The second raised portion 170 abuts the bottom surface 158 of the limiting structure 154.

As the shift lever 34 rotates in the second direction D2, the selection arm 70 pivots about the first axis A1. The selection arm 70 pivots about the first axis A1 and the selection plunger 128 moves along the detent surface between the first and second detents 120,122. The selection plunger 128 moves from one of the first and second detents 120,122, and moves over the ridge 124 and into the selection plunger cavity 126 compressing the selection biasing member 130. The selection plunger 128 is disposed in the other of the first and second detents 120, 122, and the selection biasing member 130 is decompressed and retains the selection plunger 128. The shift actuator 40 is moved between the automatic transmission mode position and the manual transmission mode position and remains in the one of the automatic and manual transmission mode positions in which the operator moves the selection plunger 128.

As the selection plunger 128 moves between first and second detents 120,122, the gear plunger 94 and gear arm 68 rotate about the first axis A1 and remain in the intermediate notch 90. More specifically, as the selection plunger 128 moves from the first detent 120 to the second detents 122, the gear plunger 94 and gear arm 68 rotate about the first axis A1 and the pair of tabs 166 rotate with the gear arm 68 about the first axis A1 and do not align with the pair of apertures 164 in the manual transmission mode position. As best shown in Figure 16, the shift actuator 40 is in the manual transmission mode position with the selection plunger 128 disposed in the second detent 122 and the intermediate position with the gear plunger 94 disposed in the intermediate notch 90.

In a fifth operative example, the shift actuator 40 is in the manual transmission mode position with the selection plunger 128 disposed in the second detent 122 and the + position with the gear plunger 94 moved to the second notch 84. More specifically, the shift lever 34 is moved in the first direction D1 and the gear plunger 94 is moved along the groove 80 from the intermediate notch 90 and is disposed second notch 84. The fifth operative example is similar to the second operative example shown in Figure 19 except the selection plunger 128 is disposed in the first detent 120. Turning to Figure 23, the one of the tabs 166 extending towards the top surface 156 abuts the top surface 156 when the gear plunger 68 is moved to the intermediate notch 90 to the second notch 84 to change the transmission to the + position.

In a sixth operative example not shown, the shift actuator 40 is in the manual transmission mode position with the selection plunger 128 disposed in the second detent 122 and the - position with the gear plunger 94 moved to the third notch 86. More specifically, the shift lever 34 is moved in the first direction D1 and the gear plunger 94 is moved along the groove 80 from the intermediate notch 90 and is disposed in the third notch 86. The sixth operative example is similar to the third operative example shown in Figure 20 except the selection plunger 128 is disposed in the first detent 120. The other of the tabs 166 extends towards the bottom surface 158 abuts the bottom surface 158 when the gear plunger 68 is moved to the intermediate notch 90 to the third notch 86 to change the transmission to the - position.

As best shown in Figure 16, the shift actuator 40 is in the manual transmission mode position with the selection plunger 128 disposed in the second detent 122 and the gear plunger 94 disposed in the intermediate notch 90. As the selection arm 70 rotates about the second axis A2, the one of the fingers 190 extending towards the first set of ribs 178 rotates in the middle chamber 180 and the other of the fingers 190 extending towards the second set of ribs 184 rotates in the second chamber 186.

As the selection arm 70 is pivoted about the first axis A1, the selection plunger 128 moves from the second detent 122 to the first detent 120 to select the automatic transmission mode. The one of the fingers 190 extending towards the first set of ribs 178 moves from the middle chamber 180 to the first chamber 182 through the one of the orifices 188 defined between the first set of ribs 178. The other of the fingers 190 extending towards the second set of ribs 184 moves from the second chamber 186 to the middle chamber 180 through the other of the orifices 188 defined between the second set of ribs 184.

Turning to Figure 3, the shift actuator 40 is in the automatic transmission selection position with the selection plunger 128 disposed in the first detent 120 and the gear plunger 94 disposed in the intermediate notch 90. As the selection arm 70 rotates about the second axis A2, the one of the fingers 190 extending towards the first set of ribs 178 rotates in the first chamber 182 and the other of the fingers 190 extending towards the second set of ribs 184 rotates in the middle chamber 180.

As the one of the fingers 190 extending towards the first set of ribs 178 moves through the one of the orifices 188 defined between the first set of ribs 178, the head 192 collides with the first set of ribs 178 if the selection arm 70 rotates about the second axis A2. As the other of the fingers 190 extending towards the second set of ribs 184 moves through the other of the orifices 188 defined between the second set of ribs 184, the head 192 collides with the second set of ribs 184 if the selection arm 70 rotates about the second axis A2. The selection arm 70 is prevented from rotating about the second axis A2 as the selection arm 70 pivots about the first axis A1. The collision of the one of the fingers 190 extending towards the first set of ribs 178 and the first set of ribs 178 and the other of the fingers 190 extending towards the second set of ribs 184 with the second set of the ribs prevents the shifter assembly 30 from selecting a gear as the shifter assembly 30 is selecting between the automatic transmission mode and the manual transmission mode.

As best shown in Figure 24 and 26, the lock actuator 196 is engaged and facilitates movement of the actuator rod 198 away from the lock actuator 196. The actuator rod 198 facilitates pivoting of the lock bracket 200 away from the shift actuator 40 with the shift actuator 40 removed from the slot 206. The shift actuator 40 can pivot about the first axis A1 or the second axis A2.

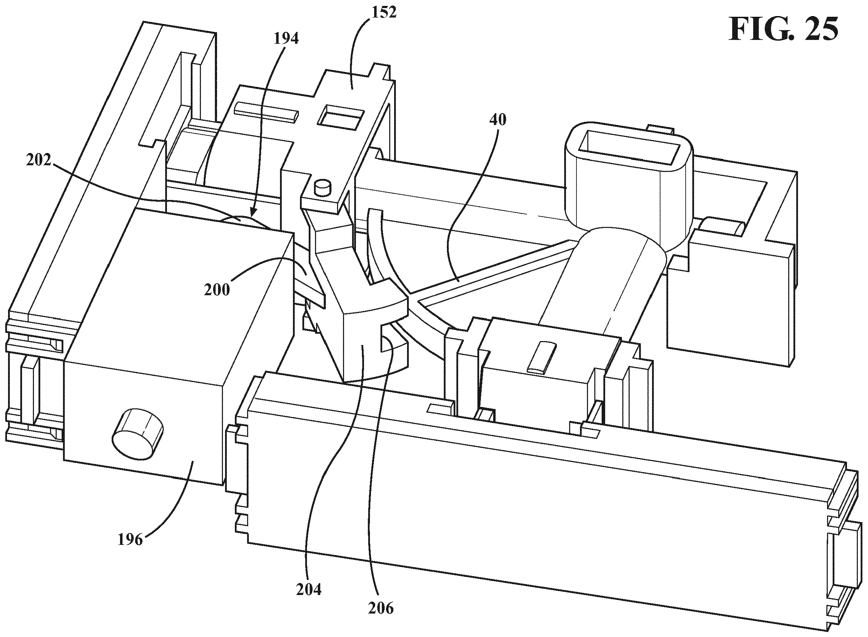

As best shown in Figure 25, the lock actuator 196 is dis-engaged and facilitates movement of the actuator rod 198 towards the lock actuator 196. The actuator rod 198 facilitates pivoting of the lock bracket 200 towards the shift actuator 40 with the slot 206 being disposed around the shift actuator 40. The shift actuator 40 cannot pivot about the first axis A1 or second axis A2.

The present invention has been described in an illustrative manner, and it is to be understood that the terminology which has been used in intended to be in the nature of words of description rather than of limitation. Obviously, many modifications and variations of the present invention are possible in light of the above teachings. The inventions may be practiced otherwise than as specifically described within the scope of the appended claims.

## Claims

1. A shifter assembly (30) for selecting one of a plurality of gears of a transmission of a vehicle, said shifter assembly (30) comprising:
a housing (32);
a gear receiver (110) fixed relative to said housing (32);
a selection receiver (144) fixed relative to said housing (32) and spaced from said gear receiver (110);
a shift actuator (40) pivotally mounted to said housing (32) with said shift actuator (40) having a gear arm (68) defining a first axis (A1) and a selection arm (70) defining a second axis (A2) spaced from said first axis (A1) with said gear arm (68) being fixed relative to said selection arm (70);
a shift lever (34) fixed to said shift actuator (40) and movable in a first direction (D1) for rotating said shift actuator (40) about said second axis (A2) for selecting one of the plurality of gears and movable in a second direction (D2) for rotating said shift actuator (40) about said first axis (A1);
a gear emitter (104) coupled to said gear arm (68) for movement with said gear arm (68) with said gear emitter (104) transmitting a signal to said gear receiver (110) as said shift actuator (40) rotates about said second axis (A2) to select between a plurality of gears; and
a selection emitter (138) coupled to said selection arm (70) for movement with said selection arm (70) with said selection emitter (138) transmitting a signal to said selection receiver (144) as said shift actuator (40) rotates about said first axis (A1),
**characterized in that** a detent structure (118) is fixed relative to said housing (32) and defines a plurality of detents (120, 122) with said selection arm (70) being movable between said plurality of detents (120, 122) for moving said selection emitter (138) relative to said selection receiver (148).

2. A shifter assembly (30) as set forth in claim 1 wherein said selection arm (70) includes a plunger cavity (92, 126) and a plunger (94, 128) resiliently extending from said plunger cavity (92, 126) in contact with said detent structure (118) such that said plunger (94, 128) resiliently moves relative to said plunger cavity (92, 126) as said plunger (94, 128) moves between said plurality of detents (120, 122).

3. A shifter assembly (30) as set forth in claims 1 or 2 wherein said detent structure (118) includes a first detent (120) and a second detent (122) with said selection arm (70) movable in response to movement of said shift lever (34) between said first detent (120) and said second detent (122).

4. A shifter assembly (30) as set forth in claim 3 further comprising an anti-rotation structure (172) fixed relative to said housing (32) and receiving said selection arm (70) for limiting movement of said selection arm (70) about said second axis (A2) as said selection arm (70) moves between said first detent (120) and said second detent (122).

5. A shifter assembly (30) as set forth in claim 4 further comprising a groove structure (78) fixed relative to said housing (32) and defining a groove (80) having a plurality of notches (82, 84, 86, 88) and an intermediate notch (90) between said plurality of notches (82, 84, 86, 88) with said gear arm (68) movable along said groove (80) between said plurality of notches (82, 84, 86, 88) from said intermediate notch (90) for moving said gear emitter (104) relative to said gear receiver (114).

6. A shifter assembly (30) as set forth in claim 5 wherein one of said selection arm (70) and said anti-rotation structure (172) defines a finger (190) and the other of said selection arm (70) and said anti-rotation structure (172) defines an orifice (188), said finger (190) collides with said orifice (188) when said selection arm (70) moves between said first detent (120) and second detent (122) and said gear arm (68) moves from said intermediate notch (90) towards any of said plurality of notches (82, 84, 86, 88) of said groove structure (78).

7. A shifter assembly (30) as set forth in claims 3-6 further comprising a limiting structure (154) fixed relative to said housing (32) and receiving said gear arm (68), wherein one of said gear arm (68) and said limiting structure (154) includes a limiting surface (160) defining an aperture (164) and the other of said gear arm (68) and said limiting structure (154) includes a tab (166) configured to be received in said aperture (164), said tab (166) being disposed in said aperture (164) when said gear arm (68) pivots about said second axis (A2) and said selection arm (70) is disposed in said first detent (120) and said tab (166) abutting said limiting surface (154) when said gear arm (68) pivots about said second axis (A2) and said selection arm (70) is disposed in said second detent (122).

## Patentansprüche

1. Schaltanordnung (30) zum Auswählen eines aus einer Mehrzahl von Gängen eines Fahrzeuggetriebes, wobei die Schaltanordnung (30) aufweist:
ein Gehäuse (32),
einen Gangempfänger (110), der relativ zu dem Gehäuse (32) fixiert ist,
einen Auswahlempfänger (144), der relativ zu dem Gehäuse (32) fixiert ist und auf Abstand zu dem Gangempfänger (110) liegt,
einen Schaltaktuator (40), der schwenkbar in dem Gehäuse (32) gelagert ist, wobei der Schaltaktuator (40) einen Gangarm (68), der eine erste Achse (A1) definiert, und einen Auswahlarm (70) aufweist, der eine zweite, von der ersten Achse (A1) beabstandete Achse (A2) definiert, wobei der Gangarm (68) relativ zu dem Auswahlarm (70) fixiert ist,
einen Schalthebel (34), der an dem Schaltaktuator (40) befestigt ist und der in eine erste Richtung (D1) zum Drehen des Schaltaktuators (40) um die zweite Achse (A2) zur Auswahl eines aus der Mehrzahl von Gängen beweglich ist und in eine zweite Richtung (D2) zum Drehen des Schaltaktuators (40) um die erste Achse (A1) beweglich ist,
einen Gangemitter (104), der mit dem Gangarm (68) verbunden ist, um sich mit dem Gangarm (68) zu bewegen, wobei der Gangemitter (104), wenn der Schaltaktuator (40) sich um die zweite Achse (A2) dreht, ein Signal zu dem Gangempfänger (110) sendet, um zwischen einer Mehrzahl von Gängen auszuwählen, und
einen Auswahlemitter (138), der mit dem Auswahlarm (70) verbunden ist, um sich mit dem Auswahlarm (70) zu bewegen, wobei der Auswahlemitter (138), wenn sich der Schaltaktuator (40) um die erste Achse (A1) dreht, ein Signal zu dem Auswahlempfänger (144) sendet,
**dadurch gekennzeichnet, dass** eine Raststruktur (118) relativ zu dem Gehäuse (32) befestigt ist und eine Mehrzahl von Rastungen (120, 122) definiert, wobei der Auswahlarm (70) zwischen der Mehrzahl von Rastungen (120, 122) beweglich ist, um den Auswahlemitter (138) relativ zu dem Auswahlempfänger (148) zu bewegen.

2. Schaltanordnung (30) nach Anspruch 1, wobei der Auswahlarm (70) einen Stößelhohlraum (92, 126) und einen Stößel (94, 128) aufweist, der nachgiebig aus dem Stößelhohlraum (92, 126) vorsteht und in Kontakt mit der Raststruktur (118) ist, so dass der Stößel (94, 128) sich nachgiebig relativ zu dem Stößelhohlraum (92, 126) bewegt, wenn der Stößel (94, 128) sich zwischen der Mehrzahl von Rastungen (120, 122) bewegt.

3. Schaltanordnung (30) nach Anspruch 1 oder 2, wobei die Raststruktur (118) eine erste Rastung (120) und eine zweite Rastung (122) umfasst, wobei der Auswahlarm (70) in Reaktion auf Bewegung des Schalthebels (34) zwischen der ersten Rastung (120) und der zweiten Rastung (122) beweglich ist.

4. Schaltanordnung (30) nach Anspruch 3, die weiter eine Antirotationsstruktur (172) aufweist, die relativ zu dem Gehäuse (32) fixiert ist und den Auswahlarm (70) aufnimmt, um die Bewegung des Auswahlarms (70) um die zweite Achse (A2) zu begrenzen, wenn der Auswahlarm (70) sich zwischen der ersten Rastung (120) und der zweiten Rastung (122) bewegt.

5. Schaltanordnung (30) nach Anspruch 4, die weiter eine Nutstruktur (78) aufweist, die relativ zu dem Gehäuse (32) fixiert ist und eine Nut (80) mit einer Mehrzahl von Vertiefungen (82, 84, 86, 88) und eine mittlere Vertiefung (90) zwischen der Mehrzahl von Vertiefungen (82, 84, 86, 88) definiert, wobei der Gangarm (68) entlang der Nut (80) zwischen der Vielzahl von Vertiefungen (82, 84, 86, 88) aus der mittleren Vertiefung (90) beweglich ist, um den Gangemitter (104) relativ zu dem Gangempfänger (114) zu bewegen.

6. Schaltanordnung (30) nach Anspruch 5, wobei einer eine von dem Auswahlarm (70) und der Antirotationsstruktur (172) einen Finger (90) definiert und der/die andere von dem Auswahlarm (70) und der Antirotationsstruktur (172) eine Öffnung (188) definiert, wobei der Finger (190) auf die Öffnung (188) trifft, wenn der Auswahlarm (70) sich zwischen der ersten Rastung (120) und der zweiten Rastung (122) bewegt und der Gangarm (68) sich aus der mittleren Vertiefung (90) zu irgendeiner aus der Mehrzahl von Vertiefungen (82, 84, 86, 88) der Nutstruktur (78) bewegt.

7. Schaltanordnung (30) nach Ansprüchen 3 - 6, die weiter eine Begrenzungsstruktur (154) aufweist, die relativ zu dem Gehäuse (32) befestigt ist und den Gangarm (68) aufnimmt, wobei einer/eine von dem Gangarm (68) und der Begrenzungsstruktur (154) eine eine Öffnung (164) definierende Begrenzungsoberfläche (160) umfasst und der/die andere von dem Gangarm (68) und der Begrenzungsstruktur (154) einen Vorsprung (166) umfasst, der dazu ausgestaltet ist, um in der Öffnung (164) aufgenommen zu werden, wobei der Vorsprung (166) in der Öffnung (164) liegt, wenn der Gangarm (68) um die zweite Achse (A2) schwenkt und der Auswahlarm (70) in der ersten Rastung (120) liegt, und wobei der Vorsprung (166) in Anlage an der Begrenzungsoberfläche (154) ist, wenn der Gangarm (68) um die zweite Achse (A2) schwenkt und der Auswahlarm (70) in der zweiten Rastung (122) liegt.

## Revendications

1. Ensemble à levier de sélection de vitesses (30) pour sélectionner l'une parmi une pluralité de vitesses d'une transmission d'un véhicule, ledit ensemble à levier de sélection de vitesses (30) comprenant :
un logement (32) ;
un récepteur de vitesse (110) fixe par rapport audit logement (32) ;
un récepteur de sélection (144) fixe par rapport audit logement (32) et espacé dudit récepteur de vitesse (110) ;
un actionneur de sélection de vitesses (40) monté de façon pivotante sur ledit logement (32), ledit actionneur de sélection de vitesses (40) possédant un bras de vitesse (68) définissant un premier axe (A1) et un bras de sélection (70) définissant un second axe (A2) espacé dudit premier axe (Al), ledit bras de vitesse (68) étant fixe par rapport audit bras de sélection (70) ;
un levier de sélection de vitesses (34) fixé audit actionneur de sélection de vitesses (40) et mobile dans une première direction (D1) pour mettre en rotation ledit actionneur de sélection de vitesses (40) autour dudit second axe (A2) pour sélectionner l'une parmi la pluralité de vitesses et mobile dans une seconde direction (D2) pour mettre en rotation ledit actionneur de sélection de vitesses (40) autour dudit premier axe (A1) ;
un émetteur de vitesse (104) accouplé audit bras de vitesse (68) pour mouvement avec ledit bras de vitesse (68), ledit émetteur de vitesse (104) transmettant un signal audit récepteur de vitesse (110) lorsque ledit actionneur de sélection de vitesses (40) entre en rotation autour dudit second axe (A2) pour sélectionner entre une pluralité de vitesses ; et
un émetteur de sélection (138) accouplé audit bras de sélection (70) pour mouvement avec ledit bras de sélection (70), ledit émetteur de sélection (138) transmettant un signal audit récepteur de sélection (144) lorsque ledit actionneur de sélection de vitesses (40) entre en rotation autour dudit premier axe (Al),
**caractérisé en ce qu'**une structure à cliquets (118) est fixe par rapport audit logement (32) et définit une pluralité de cliquets (120, 122), ledit bras de sélection (70) étant mobile entre ladite pluralité de cliquets (120, 122) pour mettre en mouvement ledit émetteur de sélection (138) par rapport audit récepteur de sélection (148).

2. Ensemble à levier de sélection de vitesses (30) selon la revendication 1, dans lequel ledit bras de sélection (70) inclut une cavité à piston plongeur (92, 126) et un piston plongeur (94, 128) s'étendant de façon résiliente à partir de ladite cavité à piston plongeur (92, 126) en contact avec ladite structure à cliquets (118) de telle sorte que ledit piston plongeur (94, 128) entre en mouvement de façon résiliente par rapport à ladite cavité à piston plongeur (92, 126) lorsque ledit piston plongeur (94, 128) entre en mouvement entre ladite pluralité de cliquets (120, 122).

3. Ensemble à levier de sélection de vitesses (30) selon les revendications 1 ou 2, dans lequel ladite structure à cliquets (118) inclut un premier cliquet (120) et un second cliquet (122), ledit bras de sélection (70) étant mobile en réponse à un mouvement dudit levier de sélection de vitesses (34) entre ledit premier cliquet (120) et ledit second cliquet (122).

4. Ensemble à levier de sélection de vitesses (30) selon la revendication 3, comprenant en outre une structure anti-rotation (172) fixe par rapport audit logement (32) et recevant ledit bras de sélection (70) pour limiter le mouvement dudit bras de sélection (70) autour dudit second axe (A2) lorsque ledit bras de sélection (70) entre en mouvement entre ledit premier cliquet (120) et ledit second cliquet (122).

5. Ensemble à levier de sélection de vitesses (30) selon la revendication 4, comprenant en outre une structure à rainure (78) fixe par rapport audit logement (32) et définissant une rainure (80) possédant une pluralité d'encoches (82, 84, 86, 88) et une encoche intermédiaire (90) entre ladite pluralité d'encoches (82, 84, 86, 88), ledit bras de vitesse (68) étant mobile le long de ladite rainure (80) entre ladite pluralité d'encoches (82, 84, 86, 88) à partir de ladite encoche intermédiaire (90) pour mettre en mouvement ledit émetteur de vitesse (104) par rapport audit récepteur de vitesse (114).

6. Ensemble à levier de sélection de vitesses (30) selon la revendication 5, dans lequel l'un parmi ledit bras de sélection (70) et ladite structure anti-rotation (172) définit un doigt (190) et l'autre parmi ledit bras de sélection (70) et ladite structure anti-rotation (172) définit un orifice (188), ledit doigt (190) entre en collision avec ledit orifice (188) lorsque ledit bras de sélection (70) entre en mouvement entre lesdits premier cliquet (120) et second cliquet (122) et ledit bras de vitesse (68) entre en mouvement à partir de ladite encoche intermédiaire (90) vers l'une quelconque parmi ladite pluralité d'encoches (82, 84, 86, 88) de ladite structure à rainure (78).

7. Ensemble à levier de sélection de vitesses (30) selon les revendications 3 à 6, comprenant en outre une structure limitatrice (154) fixe par rapport audit logement (32) et recevant ledit bras de vitesse (68), dans lequel l'un parmi ledit bras de vitesse (68) et ladite structure limitatrice (154) inclut une surface limitatrice (160) définissant une ouverture (164) et l'autre parmi ledit bras de vitesse (68) et ladite structure limitatrice (154) inclut une languette (166) configurée pour être reçue dans ladite ouverture (164), ladite languette (166) étant disposée dans ladite ouverture (164) lorsque ledit bras de vitesse (68) pivote autour dudit second axe (A2) et ledit bras de sélection (70) est disposé dans ledit premier cliquet (120) et ladite languette (166) étant contiguë à ladite surface limitatrice (154) lorsque ledit bras de vitesse (68) pivote autour dudit second axe (A2) et ledit bras de sélection (70) est disposé dans ledit second cliquet (122).
